# EUROPÄISCHE PATENTSCHRIFT

(11) **EP 0 461 305 B1**
(45) Veröffentlichungstag und Bekanntmachung des Hinweises auf die Patenterteilung: **14.09.1994**
(21) Anmeldenummer: 90121878.4
(22) Anmeldetag: 15.11.1990
(51) Int. Cl.: B01D 53/34, B01D 53/02, C04B 7/60

(54) **Verfahren zur Reinigung der Abgase von Anlagen zur Herstellung von Zementklinker**
Process for the purification of exhaust gases of plants for the production of cement clinker
Procédé pour la purification des gaz d'échappement des installations pour la production de clinker

(30) Priorität: 12.06.1990 DE 4018786
(43) Veröffentlichungstag der Anmeldung: 18.12.1991
(73) Patentinhaber: KRUPP POLYSIUS AG, 59269 Beckum (DE)
(72) Erfinder: Kupper, Detlev, Dipl.-Ing., W-4404 Telgte (DE); Schütte, Rainer, Dipl.-Ing., W-4722 Ennigerloh (DE); Brentrop, Ludger, Dr.-Ing., W-4740 Oelde 1 (DE); Rother, Wolfgang, Dipl.-Ing., W-4740 Oelde (DE)
(74) Vertreter: Tetzner, Volkmar, Dr.-Ing. Dr. jur.

(56) Entgegenhaltungen:
- EP-A- 0 268 118
- DE-A- 3 522 883
- DE-A- 3 642 178
- DE-A- 3 643 143
- GB-A- 2 122 916
- JAPANESE PATENTS GAZETTE, Sektion Ch: Chemical, Woche 8804, 9. März 1988,Klasse J, Seite 2, Zusammenfassung Nr.88-024308/04, Derwent Publications Ltd,London, GB;& JP-A-62 283 848 (ISHIKAWAJIMA-HARIMA JUKO) 09-12-1987
- ZEMENT-KALK-GIPS (ZKG), Band 41, Nr. 4, April 1988, Seiten 193-201, Wiesbaden,DE; W. KREFT: "Konzepte zum Umweltschutz in der Zementindustrie"

## Beschreibung

Die Erfindung betrifft ein Verfahren zur Reinigung der Abgase von Anlagen zur Herstellung von Zementklinker (gemäß dem Oberbegriff des Anspruches 1) sowie eine Anlage zur Herstellung von Zementklinker (entsprechend dem Oberbegriff des Anspruches 14).

Bei der Herstellung von Zementklinker enthalten die Abgase der Fertigbrennzone, die im allgemeinen durch einen Drehrohrofen gebildet wird, vielfach einen mehr oder weniger großen Anteil an Stickstoffoxiden (NOₓ), die teils durch Reaktion des Sauerstoffs mit dem Stickstoff der Verbrennungsluft, teils durch Oxidation der Stickstoffverbindungen des Brennstoffes gebildet werden (vgl. DE-Z "Zement-Kalk-Gips" 1984, S. 499 bis 507). Dieser NOₓ-Gehalt in den Abgasen ist aufgrund der sich hierdurch ergebenden Emissionsprobleme unerwünscht. Es wurden daher bereits verschiedene Verfahren und Anlagen entwickelt, um diesen NOₓ-Gehalt in den Abgasen zu verringern.

Aus "ICS proceedings" 1979, S.45, Fig.6, ist es beispielsweise bekannt, bei der Vorcalcinierung von Zementrohmaterial in der Vorcalcinationszone außerhalb des Drehrohrofens durch unterstöchiometrische Verbrennung von Brennstoff eine reduzierende Atmosphäre zu erzeugen, wobei eine Calcination des vorgewärmten Rohmateriales in zwei Stufen erfolgt: Die erste Stufe wird mit Abluft der Kühlzone unter Sauerstoffmangel betrieben, so daß ein CO-haltiges Gasgemisch aus dieser Vorcalcinationszone in die Ofenabgasleitung eintritt, in der sich damit eine reduzierende Zone bildet, in der ein Teil des NOₓ zu Stickstoff reduziert wird. Im anschließenden Teil der Ofenabgasleitung werden durch Einführung eines weiteren Anteiles von Abluft der Kühlzone Verbrennungsbedingungen geschaffen, durch die der Restausbrand des Brennstoffes erfolgen soll.

Des weiteren ist in der DE-OS 35 22 883 ein Verfahren beschrieben, bei dem in die Ofenabgase außerhalb des Drehrohrofens und vor der Einmündung der Abgase der Vorcalcinationszone zusätzlicher Brennstoff eingeführt wird, wobei die Menge dieses zusätzlichen Brennstoffes und der Sauerstoffgehalt der Ofenabgase so bemessen werden, daß in der Zone vor der Einmündung der Abgase der Vorcalcinationszone eine unterstöchiometrische Verbrennung in den Abgasen der Brennzone erfolgt.

Gegenstand der älteren Patentanmeldung EP-A-0 436 822 ist ferner ein Verfahren, das es gestattet, mit sehr wirkungsvoll und zugleich wirtschaftlich arbeitenden Mitteln den NOₓ-Gehalt der Abgase deutlich zu senken und zugleich die Abgase von störenden Schwermetallen und Spurenschadstoffen zu reinigen. Zu diesem Zweck werden die Abgase der Vorwärmzone durch eine mehrstufige Filterzone hindurchgeführt, wobei in einer ersten Filterstufe die Abscheidung von in den Abgasen enthaltenem Staub erfolgt, während in einer nachgeschalteten weiteren Filterstufe ein zur Einbindung von NHₓ-Verbindungen, Schwermetallen, Spurenschadstoffen und/ SO₂ geeignetes Adsorbens vorgesehen ist, von dem wenigstens ein Teil in bestimmten Zeitintervallen bzw. bei einer bestimmten Schadstoffbeladung aus der Filterstufe entfernt und in die Fertigbrenn- und/oder Vorwärmzone eingeführt wird. Die NHₓ-Verbindungen liegen dabei in den Abgasen einer Klinkerbrennanlage vorwiegend entweder in Form von Aerosolen oder von Gasbestandteilen vor. Das Adsorbens (beispielsweise kohlenstoffhaltiges Material, Zeolith oder stickstoffhaltiges Material) dient dabei auch zur Adsorption von Schwefeldioxid (SO₂). In dem Brennprozeß zur Klinkerherstellung werden die durch das Adsorbens gebundenen NHₓ-Verbindungen wieder freigesetzt und tragen wesentlich zur Reduktion der beim Klinkerbrennprozeß entstehenden NOₓ-Verbindungen bei. Dadurch wird bereits während des Klinkerbrennprozesses eine deutliche NOₓ-Reduzierung erreicht und die in der Filterzone zu erbringende Entstickungsleistung verringert.

Der Erfindung liegt die Aufgabe zugrunde, ein Verfahren entsprechend dem Oberbegriff des Anspruches 1 sowie eine Anlage gemäß dem Gattungsbegriff des Anspruches 14 (und damit das Verfahren sowie die Anlage gemäß der älteren Anmeldung EP-A-0 436 822) insbesondere im Hinblick auf Wirksamkeit und Wirtschaftlichkeit der Abgasreinigung durch verhältnismäßig einfache Maßnahmen weiter zu verbessern.

Diese Aufgabe wird erfindungsgemäß durch die kennzeichnenden Merkmale der Ansprüche 1 und 14 gelöst. Zweckmäßige Ausgestaltungen und Weiterbildungen der Erfindung sind Gegenstand der Unteransprüche.

Bei dem erfindungsgemäßen Verfahren werden die Abgase der Vorwärmzone vor der ersten Filterstufe auf eine solche Filterzonen-Eingangstemperatur eingestellt, daß in dieser ersten Filterstufe leicht flüchtige Schadstoffelemente und Schadstoffverbindungen, wie Schwermetalle und Spurenschadstoffe zusammen mit dem Staub aus den Abgasen abgeschieden werden, während die Einbindung restlicher Schadstoffe und die NOₓ-Reduzierung in der weiteren Filterstufe vorgenommen wird. Durch diese Teil- bzw. Vorabscheidung (Adsorption) der leicht flüchtigen Schadstoffelemente und Schadstoffverbindungen in der ersten Filterstufe wird die nachfolgende weitere Filterstufe ganz erheblich entlastet. Dadurch läßt sich eine wesentliche Verkleinerung und eine beachtliche Verbesserung der Wirksamkeit der Filterzone und damit insgesamt eine erhebliche Verbesserung der Wirtschaftlichkeit des ganzen Abgas-Reinigungssystems erreichen.

Um zu vermeiden, daß sich aus den in der ersten Filterstufe - zusammen mit dem Staub - abgeschiedenen Schadstoffen ein störender Kreislauf aufbauen kann, werden die in der ersten Filterstufe anfallenden, Staub und abgeschiedene Schadstoffelemente und Schadstoffverbindungen enthaltenden Feststoffe zweckmäßig wenigstens teilweise aus der Zementklinker-Herstellungsanlage entfernt.

Wenn dabei der Zementklinker in einer zur Herstellungsanlage gehörenden Zementmahlzone fertiggemahlen wird, kann es vorteilhaft sein, einen Teil der in der ersten Filterstufe anfallenden Feststoffe in dieser Zementmahlzone dem zu mahlenden Zementklinker zuzugeben. Hierdurch kann wenigstens ein Teil des in der ersten Filterstufe abgeschiedenen Staubes auf wirtschaftliche Weise weiterverwertet werden, ohne daß dadurch die wirtschaftliche und wirkungsvolle Reinigung der Vorwärmzonen-Abgase hinsichtlich der genannten Schadstoffe beeinträchtigt wird.

In der praktischen Ausführung werden die Abgase der Vorwärmzone aus wirtschaftlichen Gründen vielfach wahlweise im Direktbetrieb über einen Kühlturm oder im Verbundbetrieb durch eine Rohmaterialmühle durchgeführt und dann in die Filterzone eingeleitet, wodurch diese Abgase bereits eine erhebliche Abkühlung erfahren, bevor sie die Filterzone erreichen. Für den Umfang der erfindungsgemäßen Schadstoffabscheidung in der ersten Filterstufe, also für die Abscheideleistung der genannten Schadstoffe zusammen mit dem Staub, ist es von besonderer Bedeutung, daß die Filterzonen-Eingangstemperatur bei Erreichen der ersten Filterstufe in optimaler Weise angepaßt ist. Die Abgase der Vorwärmzone vor dem Einleiten in die erste Filterstufe werden dazu zweckmäßig auf eine Filterzonen-Eingangstemperatur von etwa 70 bis 150 °C, vorzugsweise etwa 80 bis 130 °C abgekühlt. Eine entsprechende Überwachungs- und Steuereinrichtung kann für die Einstellung der zweckmäßigen Filterzonen-Eingangstemperatur sorgen. Dabei ist es von Vorteil, wenn die Filterzonen-Eingangstemperatur besonders niedrig gehalten wird. Je tiefer diese Eingangstemperatur eingestellt wird, umso besser ist die Abscheidung der genannten Schadstoffe.

Werden die Abgase der Vorwärmzone im Verbundbetrieb zunächst durch eine Rohmaterialmühle und dann in die Filterzone geleitet, so kann bereits eine Filterzonen-Eingangstemperatur im Bereich von etwa 90 bis 120 °C erreicht werden, was als besonders günstiger Temperaturbereich anzusehen ist. Falls diese Filterzonen-Eingangstemperatur noch nicht erreicht wird, dann können die Abgase durch zusätzliches Zuführen von Kühlgas, insbesondere Frischluft, auf den genannten Temperaturbereich abgekühlt werden.

Wenn andererseits die Abgase der Vorwärmzone im Direktbetrieb über einen Kühlturm und dann in die erste Filterstufe der Filterzone geleitet werden, dann wird es in der Regel erforderlich sein, diese Abgase durch zusätzliches Zuführen von Kühlgas, insbesondere Frischluft, abzukühlen, wobei ein Temperaturbereich für die Filterzonen-Eingangstemperatur von etwa 80 bis 130 °C als besonders zweckmäßig angesehen wird.

In jeder dieser praktischen Betriebsweisen kann die bereits erwähnte Überwachungs- und Steuereinrichtung für den optimalen Bereich der Filterzonen-Eingangstemperatur sorgen, indem die Abgastemperatur vor der ersten Filterstufe gemessen und im Bedarfsfalle durch die Zuführung von Kühlgas bzw. Frischluft noch weiter abgesenkt werden kann. Zu diesem Zweck ist in vorteilhafter Weise wenigstens eine vor der ersten Filterstufe angeordnete Kühlgas-Zuführeinrichtung steuerungsmäßig mit der Überwachungs- und Steuereinrichtung verbunden.

Dabei kann dann in der jeweils erforderlichen Weise die Menge des den Abgasen vor der ersten Filterstufe zuzuführenden Kühlgases in Abhängigkeit von einem vor dieser ersten Filterstufe ermittelten Meßwert von Hand oder - vorzugsweise - automatisch geregelt werden.

In einer günstigen Ausführung kann dies auch dadurch geschehen, daß für die Regelung der vor der ersten Filterstufe den Abgasen der Vorwärmzone zuzuführenden Kühlgasmenge zusätzlich die Gasqualität im Bereich zwischen der ersten und der zweiten Filterstufe ermittelt und in entsprechender Weise verarbeitet wird.

Ferner kann es noch besonders vorteilhaft sein, unabhängig von der Kühlgaszuführung vor der ersten Filterstufe zwischen der ersten und der zweiten Filterstufe Frischluft zur Konditionierung der Eingangsbedingungen der Abgase in die zweite Filterstufe in Anpassung an betriebsbedingte Schwankungen der Zementklinker-Herstellungsanlage einzuführen. Diese zweite, gesonderte Frischluftzufuhr dient dann ausschließlich der Konditionierung der Eingangsbedingungen für diese das Adsorbens enthaltende weitere Filterstufe, d.h. es werden hierdurch beispielsweise die Gastemperatur und das Gasvolumen an unterschiedliche Betriebsverhältnisse beim Fertigbrennen bzw. Vorwärmen und Calcinieren angepaßt, und zwar im Hinblick auf konstante Eingangsbedingungen der in der ersten Filterstufe vorgereinigten Abgase beim Eintritt in die zweite Filterstufe.

Vorteilhaft ist es ferner, wenn wenigstens ein Teil des mit NHₓ-Verbindungen, Schwermetallen, Spurenschadstoffen und/oder SO₂ beladenen Adsorbens der zweiten bzw. weiteren Filterstufe in bestimmten Zeitabständen bzw. bei einer bestimmten Schadstoffbeladung aus dieser Filterstufe abgezogen und in die Fertigbrennzone und/oder Vorwärmzone eingeführt wird.

Als Adsorbens können in der weiteren Filterstufe alle geeigneten Materialien verwendet werden, insbesondere kohlenstoffhaltige Materialien, die aufgrund ihres Heizwertes bei Einführung in den Klinkerbrennprozess bzw. Calcinierprozeß zugleich als Brennstoff wirken. Bei der Verwendung eines kohlenstoffhaltigen Adsorbens werden ferner in den Abgasen enthaltene Kohlenwasserstoffverbindungen und/oder geruchsbildende Gasbestandteile zumindest teilweise vom Adsorbens zurückgehalten, wobei diese Kohlenwasserstoffverbindungen und/oder geruchsbildenden Bestandteile bei Einführung des hiermit beladenen Adsorbens in den Klinkerbrennprozeß oxidiert werden.

Weiterhin kann auch ein Zeolith, d.h. ein aluminiumhaltiges Silikat, als Adsorbens eingesetzt werden. Auch stickstoffhaltige Materialien, vorzugsweise Kalk-Stickstoff-Verbindungen, können vorteilhaft als Adsorbens im Rahmen des erfindungsgemäßen Verfahrens verwendet werden.

Beim Einführen des mit den genannten Schadstoffen beladenen Adsorbens in die Fertigbrennzone und/oder Vorwärmzone wird zweckmäßig auf die jeweilige Beladung des Adsorbens geachtet. Die in die Fertigbrenn-, Calcinier- und/oder Vorwärmzone eingeführte Menge des mit NHₓ-Verbindungen, Schwermetallen, Spurenschadstoffen und/oder SO₂ beladenen Adsorbens wird zweckmäßig in Abhängigkeit vom Cl- und/oder SO₃-Gehalt des Rohmaterials geändert, wobei dieser Schadstoffgehalt des Rohmateriales vorzugsweise an der Schnittstelle zwischen Vorwärm- bzw. Vorcalcinationszone und Fertigbrennzone gemessen wird (also in dem vorgewärmten bzw. vorcalcinierten Gut). Die Änderung der Menge des in den Klinkerbrennprozeß eingeführten Adsorbens kann in Form einer Steuerung oder Regelung erfolgen.

Die Menge des Adsorbens, das aus der zur Einbindung von NHₓ-Verbindungen, Schwermetallen, Spurenschadstoffen und/oder SO₂ dienenden weiteren Filterstufe entfernt wird, sowie der Zeitpunkt dieser Entfernung werden zweckmäßig durch Messung der Konzentration zumindest einer Abgaskomponente, vorzugsweise hinter dieser Filterstufe, bestimmt. Auch hierbei können Änderungen entweder in Form einer einfachen Steuerung oder als automatische Regelung durchgeführt werden. Außerdem können als Regelgröße auch der Druckverlust in dieser Filterstufe sowie die Belastung des Adsorbens mit einer Schadstoffkomponente herangezogen werden.

Das erfindungsgemäße Reinigungsverfahren gestattet weiterhin die weitgehende Verwendung von Sekundärbrennstoffen, wobei die Emission von Schadstoffen, insbesondere von halogenierten organischen Verbindungen, wie Dioxinen und Furanen, im Vergleich zu bekannten Verfahren um bis zu zwei Zehnerpotenzen gesenkt werden kann.

Aufgrund der speziellen verfahrenstechnischen Bedingungen beim Brennen von Zementklinker (insbesondere aufgrund der hohen Temperaturen und verhältnismäßig langen Verweilzeiten bei diesen hohen Temperaturen) hat man schon bisher in gewissem Umfang einen Teil des normalerweise für die Zementherstellung verwendeten Brennstoffes (wie Kohle, Öl oder Gas) durch sogenannte Sekundärbrennstoffe ersetzt. Bei diesen Sekundärbrennstoffen handelt es sich beispielsweise um Altreifen, Bleicherde, Brennstoff aus Müll, Deponiegas, Pyrolysegas, Lösungsmittelrückstände, PCT-kontaminiertes Altöl, Klärschlamm, Holzspäne und/oder Fruchtschalen.

Trotz der vorstehend genannten besonderen Prozeßbedingungen bei der Zementherstellung haben jedoch Messungen gezeigt, daß es vielfach (beispielsweise bei der Verbrennung PCB-haltiger Altöle) doch noch zu meßbaren Emissionen von Dioxinen und Furanen sowie von anderen, teilweise chlorierten Verbindungen kommen kann. Aufgrund der besonderen Giftigkeit dieser Substanzen sowie mit Rücksicht darauf, daß diese Verbindungen nicht oder nur in sehr geringem Maße biologisch abbaubar sind und sich damit in der Umwelt anreichern, sind derartige Schadstoffemissionen sehr bedenklich.

Für viele Sekundärbrennstoffe kam bisher wegen ihrer vielfach hohen thermischen Stabilität nur die Hauptfeuerung einer Drehrohrofenanlage in Betracht, da nur auf diese Weise die erforderlichen hohen Temperaturen von mehr als 1200°C und Gasverweilzeiten von mehr als 2 Sekunden erreicht wurden. Ein Einsatz der Sekundärbrennstoffe in der Hauptfeuerung einer Drehrohrofenanlage setzt jedoch aus feuerungstechnischen Gründen regelmäßig eine Vorbehandlung der Sekundärbrennstoffe (wie Zerkleinerung oder Homogenisierung) voraus, was sehr aufwendig ist.

Bei Anwendung des erfindungsgemäßen Reinigungsverfahrens können nun auch Sekundärbrennstoffe, die thermisch verhältnismäßig stabile Verbindungen darstellen, in der Vorcalcinierzone (d.h. in dem zur Entsäuerung des Rohmateriales dienenden Teil der Vorwärmzone) verbrannt werden oder in einfacher Weise in den guteintragsseitigen Bereich der Fertigbrennzone, d.h. in den Einlauf des Drehrohrofens eingeführt werden. Die hierbei eventuell entstehenden Crackprodukte sowie die noch nicht vollständig aufoxidierten gasförmigen Produkte werden in der oben bereits im einzelnen beschriebenen, erfindungsgemäßen Filterzone adsorbiert.

Für die Wirtschaftlichkeit des Verfahrens ist es dabei von großer Bedeutung, daß die Adsorptionsmittel entweder aufgrund ihrer chemischen Zusammensetzung zur Zementherstellung geeignet sind oder daß beispielsweise der Kohlenstoffgehalt der Adsorptionsmittel einen Teil der zur Zementherstellung erforderlichen thermischen Energie beisteuern kann.

Das beladene Adsorbens wird entweder periodisch oder kontinuierlich aus der Adsorptionsstufe abgezogen und durch frisches Material ersetzt. Das beladene Adsorbens wird - falls es sich um ein brennbares Material handelt - vorzugsweise durch Zugabe über den Hauptbrenner in die Hochtemperaturzone des Drehrohrofens eingeführt. Auch bei den nichtbrennbaren Stoffen empfiehlt sich eine Rückführung in die Fertigbrennzone, d.h. in den Drehrohrofen, da hierdurch die adsorbierten organischen Schadstoffe ein zweites Mal einer thermischen Behandlung unterworfen und hierdurch weitestgehend abgebaut werden.

Außer organischen Komponenten, wie Dioxinen, Furanen sowie anderen halogenierten oder nichthalogenierten Kohlenwasserstoffen, können mit dem erfindungsgemäßen Verfahren auch andere umweltrelevante Schadstoffe, wie etwa leicht verdampfbare Schwermetallverbindungen, abgeschieden werden. Bei Quecksilber, Thallium oder Cadmium ist es dann notwendig, zur Vermeidung von Anreicherungen in Kreisläufen eine entsprechende Senke zu schaffen. Dies kann durch Installation eines Gas-Bypasses geschehen. Eine zweite Möglichkeit besteht darin, einen Teil des Filterstaubes zu verwerfen (Ablagerung auf einer Deponie oder Zumahlung zum Zement). Bei einer Zumahlung zum Zement werden die im Filterstaub enthaltenen Schwermetalle letztlich umweltneutral in den Beton eingebunden.

Die Erfindung sei nachfolgend noch anhand einiger in der Zeichnung veranschaulichter Ausführungsbeispiele erläutert. Es zeigen
- Fig.1: ein Schema einer erfindungsgemäßen Anlage zur Herstellung von Zementklinker;
- Fig.2 und 3: Ausschnitte dieses Anlagenschemas zur Erläuterung zweier Ausführungsvarianten für die Abgasregelung im Bereich eines Staubfilters bzw. der ersten Filterstufe.

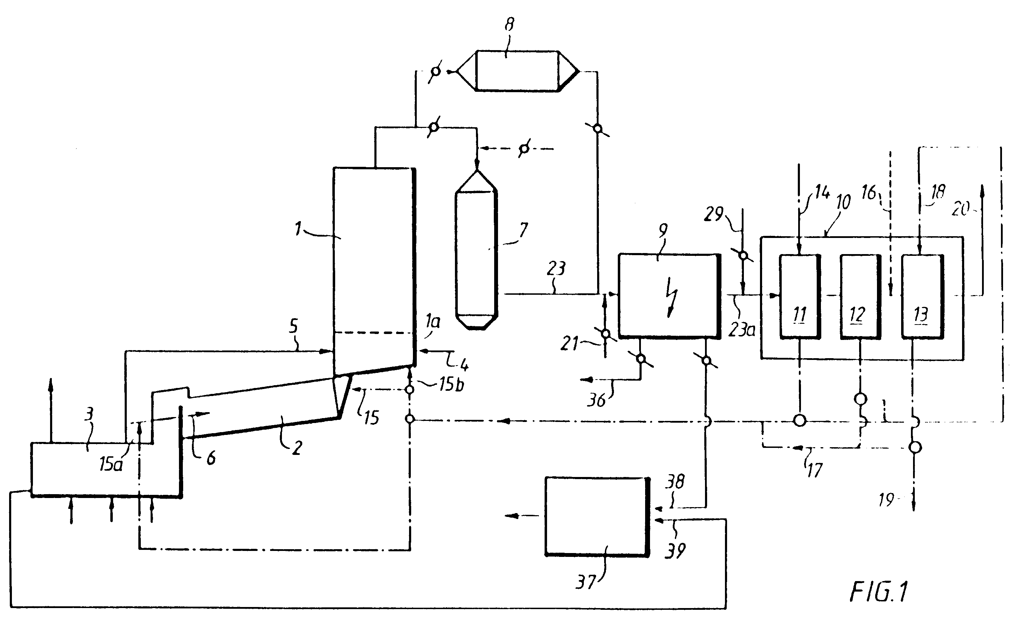

In Fig.1 ist die zur Herstellung von Zementklinker bzw. zur Durchführung des erfindungsgemäßen Verfahrens bestimmte Anlage nur ganz schematisch veranschaulicht. Hiernach enthält die Anlage einen zur Vorwärmung und zumindest teilweisen Entsäuerung des Rohmateriales dienenden Vorwärmers 1, einen zum Fertigbrennen des vorgewärmten und entsäuerten Materiales dienenden Fertigbrennofen in Form eines Drehrohrofens 2, sowie einen Kühler 3 zum Abkühlen des fertiggebrannten Zementklinkers.

Der Vorwärmer 1 kann in an sich bekannter Weise in seinem unteren Bereich eine mit zusätzlichem Brennstoff (Pfeil 4) und Abluft (Pfeil 5) des Kühlers 3 versorgte Vorcalcinationszone 1a zur weitgehenden Entsäuerung des vorgewärmten Rohrmateriales enthalten.

Der Drehrohrofen 2 wird in üblicher Weise von der Gutaustragsseite her befeuert bzw. mit Brennstoff versorgt (Pfeil 6). Die Abgase des Drehrohrofens durchsetzen den Vorwärmer 1 und gelangen dann wahlweise entweder im Direktbetrieb über einen Kühlturm 7 oder im Verbundbetrieb durch eine Rohmaterialmühle bzw. Rohmühle 8, die zur Mahltrocknung des Rohmateriales dient, in eine mehrstufe Filterzone, die zumindest einen ersten Filter 9 sowie einen zweiten Filter 10 als erste und zweite bzw. weitere Filterstufe enthält.

Der als erste Filterstufe der Filterzone verwendete erste Filter 9 ist generell zur Entstaubung der Abgase des Vorwärmers 1 ausgebildet. In der im Anlagenbeispiel gemäß Fig.1 angedeuteten Form ist dieser erste Filter als üblicher Elektrofilter ausgebildet. Er kann jedoch auch in ebenfalls allgemein bekannter Weise als Schlauchfilter oder dergleichen ausgeführt sein.

Der die zweite Filterstufe der Filterzone bildende zweite Filter 10 enthält in dem veranschaulichten Anlagenbeispiel (Fig.1) drei als Schüttschichtreaktoren ausgebildete Filterkammern 11, 12 und 13, die von den entstaubten Abgasen nacheinander durchströmt werden. Zumindest der ersten Filterkammer 11 wird ein Adsorbens 14 zugeführt, das nach einer bestimmten Beladung mit NHₓ-Verbindungen, Schwermetallen, Spurenschadstoffen und/oder SO₂ wenigstens teilweise aus der ersten Filterkammer 11 ausgeschleust und dem Guteinlaufbereich des Drehrohrofens 2 zugeführt werden kann (Pfeil 15), worauf später nochmals eingegangen wird.

Zwischen der zweiten Filterkammer 12 und der dritten Filterkammer 13 (die gleichfalls das erwähnte Adsorbens enthalten können) wird Ammoniak (NH₃) zugegeben (Pfeil 16), so daß in der dritten Filterkammer (13) eine Reduzierung der noch im Abgasstrom vorhandenen NOₓ-Verbindungen mittels des NH₃-haltigen Gases erfolgt, wobei das Adsorbens hierbei eine katalytische Wirkung erfüllt.

Wie durch weitere strichpunktierte Linien und Pfeile angedeutet ist, kann außer aus der ersten Filterkammer 11 eventuell auch aus der zweiten Filterkammer 12 ausgeschleustes Adsorbens zumindest teilweise zum Drehrohrofen 2 geführt werden (entsprechend den Pfeilen 17 und 15). Ein weiterer Anteil dieses aus den Filterkammern 11 und 12 ausgeschleusten Adsorbens kann der letzten Filterkammer 13 zugeführt werden (Pfeil 18), um hier überschüssiges bzw. durchbrechendes NH₃ einzubinden. Aus dieser dritten Filterkammer 13 ausgeschleustes Adsorbens kann dann entweder ebenfalls zumindest teilweise zum Drehrohrofen 2 geführt werden (Pfeil 17) oder einer Deponie zugeführt oder anderweitig eingesetzt werden (Pfeil 19). Es sei in diesem Zusammenhang auch erwähnt, daß im Bedarfsfalle auch mehr als drei Filterkammern vorgesehen sein können, in denen jeweils ein geeignetes Adsorbens enthalten ist.

Die den Filter 10 verlassenden, gereinigten Abgase gelangen dann in einen Kamin (Pfeil 20).

Wie bereits weiter oben erwähnt worden ist, können je nach Bedarf verschiedene Adsorptionsmittel in den einzelnen Filterkammern 11, 12 und 13 zum Einsatz kommen, also beispielsweise kohlenstoffhaltiges Material, Zeolith oder stickstoffhaltige Materialien.

Wenn dabei kohlenstoffhaltiges Material als Adsorbens verwendet wird, muß das mit Schadstoffen beladene Adsorbens aus dem zweiten Filter 10 nicht unbedingt dem Guteinlaufbereich des Drehrohrofens 2 zugeführt werden, wie es durch Pfeil 15 angedeutet ist. Es kann vielmehr auch vorteilhaft sein, dieses mit Schadstoffen beladene, kohlenstoffhaltige Adsorbens aufgrund seines Heizwertes als Brennstoff bzw. als einen Teil des erforderlichen Brennstoffes in den Klinkerbrennprozeß einzuführen. Bei dem in Fig.1 veranschaulichten Ausführungsbeispiel, bei dem die Fertigbrennzone bzw. der Fertigbrennofen durch einen von der Gutaustragseite her beheizten Drehrohrofen 2 gebildet wird, kann somit zumindest ein Teil des aus dem zweiten Filter 10 entfernten Adsorbens der Feuerung (Pfeil 6) dieses Drehrohrofens 2 zugeführt werden, wie es durch den Pfeil 15a angedeutet ist. Ferner kann hierbei zusätzlich zum Adsorbens ein kohlenstoffhaltigers Reduktionsmittel in den Guteintragsbereich der Fertigbrennzone eingeführt werden, z.B. über einen Ofeneinlaufbrenner. Auf diese Weise wird in dem genannten Guteintragsbereich des Drehrohrofens eine zumindest lokal reduzierende Atmosphäre erzeugt, wodurch die NOₓ-reduzierende Wirkung des Adsorbens verstärkt wird.

Darüber hinaus besteht auch die Möglichkeit zumindest einen Teil des mit Schadstoffen beladenen Adsorbens aus dem zweiten Filter 10 gemäß Pfeil 15b in den die Vorcalcinationszone 1a bildenden unteren Teil des Vorwärmers 1 entweder zusätzlich zu dem dort eingeführten Brennstoff (Pfeil 4) oder anstelle dieses Brennstoffes einzuführen.

Von besonderer Bedeutung für die Verfahrensweise beim Betrieb dieser Zementklinker-Herstellungsanlage ist es nun, daß die Abgase des die Vorwärmzone bildenden Vorwärmers 1 vor dem ersten Filter 9 auf eine solche Filter-Eingangstemperatur eingestellt werden, daß in diesem ersten Filter 9 leicht flüchtige Schadstoffelemente und Schadstoffverbindungen zusammen mit dem Staub aus den Abgasen abgeschieden werden. Zu diesem Zweck enthält das Filtersystem bzw. die mehrstufige Filterzone eine Überwachungs- und Steuereinrichtung zum Einstellen der Vorwärmerabgase vor dem ersten Filter 9 auf eine Eingangstemperatur zwischen etwa 70 °C und 150 °C, vorzugsweise zwischen etwa 80 °C und 130 °C. Dabei ist wenigstens eine vor diesem ersten Filter 9 angeordnete Kühlgaszuführeinrichtung 21 vorgesehen, die steuerungsmäßig mit der zuvor erwähnten Überwachungs- und Steuereinrichtung verbunden ist.

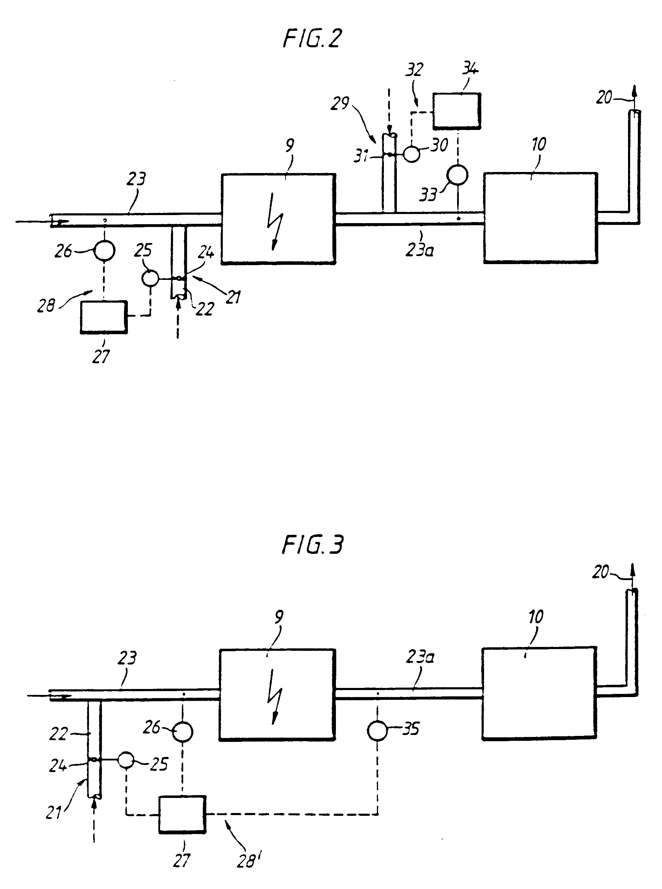

Ein erstes Ausführungsbeispiel für die Ausbildung der zuvor erwähnten Überwachungs- und Steuereinrichtung ist in Fig.2 im Bereich des ersten Filters 9 und des zweiten Filters 10 schematisch veranschaulicht. Im Bereich vor dem ersten Filter 9 kann man zunächst die Kühlgas-Zuführeinrichtung 21 erkennen, die eine Leitung 22 enthält, die ihrerseits an eine die Abgase dem ersten Filter 9 zuführende Abgasleitung 23 angeschlossen ist. Über diese Leitung 22 kann ein geeignetes Kühlgas, insbesondere Frischluft, in die Abgasleitung 23 vor dem ersten Filter 9 eingeleitet werden, und zwar in genau steuerbarer Weise, wozu in dieser Kühlgasleitung 22 eine Einstellklappe 24 vorgesehen ist, die durch einen Stellantrieb 25 zwischen einer ganz geschlossenen Stellung und einer ganz geöffneten Stellung einstellbar ist.

Ferner ist - in Strömungsrichtung vor dem Anschluß der Kühlgasleitung 22 an die Abgasleitung 23 - ein Temperaturmeßglied 26 an die Abgasleitung 23 angeschlossen. Dieses Temperaturmeßglied 26 ist mit einer Steuereinheit 27 verbunden, die in an sich bekannter und daher nicht näher veranschaulichter Weise Steuer-, Rechner- und Regelelemente enthalten kann und steuerungsmäßig mit dem Stellantrieb 25 der Einstellklappe 24 verbunden ist.

Unabhängig von der zuvor beschriebenen Überwachungs- und Steuereinrichtung 28 kann es vorteilhaft sein, zwischen dem ersten Filter 9 und dem zweiten Filter 10 eine von der dem ersten Filter 9 vorgeschalteten Kühlgas-Zuführeinrichtung 21 und der Überwachungs- und Steuereinrichtung 28 unabhängige Frischluftzuführung 29 vorzusehen, die an den Abgasleitungsabschnitt 23a zwischen dem ersten Filter 9 und dem zweiten Filter 10 angeschlossen ist und ebenfalls eine durch einen Stellantrieb 30 einstellbare Stellklappe 31 enthält. Die Zufuhr von Frischluft durch diese Frischluftzuführung 29 in den Abgasleitungsabschnitt 23a kann mit Hilfe eines unabhängigen Regelkreises 32 gesteuert werden, der ebenfalls ein Temperaturmeßglied 33 und eine Steuereinrichtung 34 enthalten kann. Mit Hilfe dieser gesonderten Frischluftzuführung 29 können die dem zweiten Filter 10 zuzuführenden entstaubten Abgase in Anpassung an den Wärmebehandlungsbetrieb im Vorwärmer 1 und/oder Drehrohrofen 2 insbesondere hinsichtlich Temperatur und Volumen in gesteuerter Weise konditioniert werden.

In Fig.3 ist eine gegenüber dem Beispiel der Fig.2 etwas erweiterte Ausführungsvariante der Überwachungs- und Steuereinrichtung zum Einstellen der Vorwärmereinrichtung vor dem ersten Filter 9 veranschaulicht. Diese Überwachungs- und Steuereinrichtung 28' enthält in ähnlicher Weise wie gemäß Fig.2 ein an die Abgasleitung 23 im Bereich vor dem ersten Filter 9 angeschlossenes Temperaturmeßglied 26, das mit der Steuereinheit 27 verbunden ist. Ferner ist in diesem Falle im Bereich vor der Anschlußstelle des Temperaturmeßgliedes 26 an die Abgasleitung 23 eine gleichartige Kühlgas-Zuführeinrichtung 21 an die Abgasleitung 23 angeschlossen. Diese Kühlgas-Zuführeinrichtung 21 enthält wiederum eine Kühlgaszuführleitung 22 mit darin vorgesehener Einstellklappe 24, die in ihrem Einstellbereich durch einen Stellantrieb 25 eingestellt werden kann, der ebenfalls mit der Steuereinheit 27 steuerungsmäßig verbunden ist.

Darüber hinaus ist in dem Abgasleitungsabschnitt 23a hinter dem ersten Filter 9 eine zusätzliche Meßeinrichtung 35 angeordnet, durch die die Qualität des entstaubten Abgases ermittelt wird und die ihrerseits ebenfalls steuerungsmäßig mit der Überwachungs- und Steuereinrichtung 28' in Verbindung steht (alle Steuerverbindungsleitungen sind gestrichelt angedeutet). Bei dieser Art der Regelung bzw. Steuerung der Filterzonen-Eingangstemperatur für die Abgase wird somit zusätzlich eine die jeweilige Abgasqualität hinter dem ersten Filter 9 repräsentierende spezielle Kenngröße ermittelt, die von der übergeordneten Temperaturregelung (über die Überwachungs- und Steuereinrichtung 27) durch entsprechende Frischluftzufuhr beeinflußt werden kann. Durch diese zusätzliche Regelung der Gasqualität können damit die Eingangsbedingungen des zweiten Filters 10 ebenfalls mit beeinflußt werden.

Die Regelung der Filterzonen-Eingangstemperatur (vor dem ersten Filter 9) kann auch zusätzlich noch dadurch geregelt werden, daß vor dem Kühlturm 7 bzw. vor oder in der Rohmühle 8 Kühlgas bzw. Frischluft zugeführt wird. Im allgemeinen ist die Abkühlung der Vorwärmer-Abgase in einem Kühlturm (die in der Regel mit Kühlwasser erfolgt) für die Einstellung der geeigneten Filterzonen-Eingangstemperatur vor dem ersten Filter 9 nicht ausreichend ist; meist ist daher die erläuterte geregelte Frischluftkühlung vor diesem ersten Filter 9 notwendig.

Bei dem erfindungsgemäßen Verfahren erfolgt gleichzeitig mit der Abscheidung des in den Abgasen enthaltenen Staubes auch die Abscheidung eines erheblichen Anteiles der in den Abgasen enthaltenen leicht flüchtigen Schadstoffelemente und Schadstoffverbindungen, wie Schwermetallen und Spurenschadstoffe. Diese Vorabscheidung eines wesentlichen Anteiles der Schadstoffe entlastet dann die zweite Filterstufe (Filter 10) in erheblichem Maße, so daß diese zweite Filterstufe wesentlich wirkungsvoller arbeiten bzw. kleiner als bei bekannten Anlagen ausgeführt werden kann.

Die aus dem ersten Filter 9 abgeschiedenen Feststoffe (Filterstaub und damit abgeschiedene Schadstoffe) können zumindest zu einem Teil aus der Klinkerherstellungsanlage entfernt werden, wie dies in Fig.1 durch Pfeil 36 angedeutet ist. Darüber hinaus kann jedoch auch zumindest ein Teil dieser im ersten Filter 9 abgeschiedenen Feststoffe für die Herstellung von Zement aus dem gebrannten und abgekühlten Klinker verwendet werden. Dabei sei angenommen, daß der Zementklinker nach dem Abkühlen in üblicher Weise in einer eine sogenannte Fertigmühle 37 enthaltenen Zementmahlzone fertiggemahlen wird. In diese Fertigmühle 37 kann dann zumindest ein Teil dieser im ersten Filter 9 anfallenden Feststoffe eingeführt werden (Pfeil 38), und zwar zusammen mit dem hier fertig zu mahlenden Zementklinker aus dem Kühler 3 (Pfeil 39) bzw. aus Zwischensilos.

## Patentansprüche

1. Verfahren zum Reinigen der Abgase von Anlagen zur Herstellung von Zementklinker, wobei Zementrohmaterial in einer Vorwärmzone mit den heißen Abgasen einer Fertigbrennzone vorgewärmt und zumindest teilweise entsäuert wird, ehe das so vorgewärmte Material in der Fertigbrennzone zu Zementklinker fertiggebrannt wird, und wobei die Abgase der Vorwärmzone in einer mehrstufigen Filterzone gereinigt werden, indem zunächst in einer ersten Filterstufe eine Abscheidung von Staub aus den Abgasen erfolgt und diese Abgase danach wenigstens eine weitere Filterstufe durchströmen, die als Adsorptionsstufe ausgebildet ist und ein Adsorbens enthalten, durch das in den Abgasen enthaltene NHₓ-Verbindungen, Schwermetalle, Spurenschadstoffe und/oder SO₂ eingebunden werden und NOₓ zumindest teilweise reduziert wird,
dadurch gekennzeichnet,
daß die Abgase der Vorwärmzone vor der ersten Filterstufe auf eine solche Filterzonen-Eingangstemperatur eingestellt werden, daß in dieser ersten Filterstufe leicht flüchtige Schadstoffelemente und Schadstoffverbindungen zusammen mit dem Staub aus den Abgasen abgeschieden werden, während in der weiteren Filterstufe die Einbindung restlicher Schadstoffe und die NOₓ-Reduzierung vorgenommen wird.

2. Verfahren nach Anspruch 1, dadurch gekennzeichnet, daß die in der ersten Filterstufe anfallenden, Staub und abgeschiedene Schadstoffelemente und Schadstoffverbindungen enthaltenden Feststoffe wenigstens teilweise aus der Klinkerherstellungsanlage entfernt werden.

3. Verfahren nach Anspruch 2, bei dem der Zementklinker in einer zur Klinkerherstellungsanlage gehörenden Zementmahlzone fertiggemahlen wird, dadurch gekennzeichnet, daß ein Teil der in der ersten Filterstufe abgeschiedenen Feststoffe in der Zementmahlzone dem zu mahlenden Zementklinker zugegeben wird.

4. Verfahren nach Anspruch 1, wobei die Abgase der Vorwärmzone wahlweise im Direktbetrieb über einen Kühlturm oder im Verbundbetrieb durch eine Rohmaterialmühle in die Filterzone eingeleitet werden, dadurch gekennzeichnet, daß die Abgase vor dem Einleiten in die erste Filterstufe auf eine Filterzonen-Eingangstemperatur von etwa 70 bis 150 °C, vorzugsweise etwa 80 bis 130 °C, abgekühlt werden.

5. Verfahren nach Anspruch 4, dadurch gekennzeichnet, daß die Abgase der Vorwärmzone zumindest im Direktbetrieb durch zusätzliches Zuführen von Kühlgas, insbesondere Frischluft, abgekühlt werden, wobei die Zuführung von Kühlgas vor/oder nach dem Passieren des Kühlturmes erfolgt.

6. Verfahren nach Anspruch 5, dadurch gekennzeichnet, daß die Menge des den Abgasen vor der ersten Filterstufe zuzuführenden Kühlgases in Abhängigkeit von einem vor dieser ersten Filterstufe ermittelten Meßwert - vorzugsweise automatisch - geregelt wird.

7. Verfahren nach Anspruch 7, dadurch gekennzeichnet, daß für die Regelung der vor der ersten Filterstufe den Vorwärmzonen-Abgasen zuzuführenden Kühlgasmenge zusätzlich die Gasqualität im Bereich zwischen der ersten und der zweiten Filterstufe ermittelt und verarbeitet wird.

8. Verfahren nach Anspruch 4, dadurch gekennzeichnet, daß unabhängig von der vor der ersten Filterstufe erfolgenden Kühlgaszuführung zwischen der ersten und zweiten Filterstufe den der zweiten Filterstufe zugeführten Abgasen Frischluft zur Anpassung an betriebsbedingte Schwankungen der Zementklinker-Herstellungsanlage zugesetzt wird.

9. Verfahren nach Anspruch 1, dadurch gekennzeichnet, daß wenigstens ein Teil des mit NHₓ-Verbindungen, Schwermetallen, Spurenschadstoffen und/oder SO₂ beladenen Absorbens in bestimmten Zeitabständen bzw. bei einer bestimmten Schadstoffbeladung aus der weiteren Filterstufe abgezogen und in die Fertigbrennzone und/oder Vorwärmzone eingeführt wird.

10. Verfahren nach Anspruch 1, dadurch gekennzeichnet, daß zumindest ein Teil des eingesetzten Brennstoffes durch Sekundärbrennstoff, wie Altreifen, Säureharze, Bleicherde, Brennstoff aus Müll, Deponiegas, Pyrolysegas, Lösungsmittelrückstände, PCB-kontaminiertes Altöl, Klärschlamm, Holzspäne, Fruchtschalen, gebildet wird.

11. Verfahren nach Anspruch 10, dadurch gekennzeichnet, daß zumindest ein Teil des eingesetzten Sekundärbrennstoffes in den zur Entsäuerung des Rohmateriales dienenden Teil der Vorwärmzone (Vorcalcinationszone) und/oder in den Guteintragseitenbereich der Fertigbrennzone eingeführt wird.

12. Verfahren nach Anspruch 10 zur Reinigung von Abgasen, die auch leicht verdampfbare Schwermetallverbindungen, insbesondere von Quecksilber, Thallium und/oder Cadmium enthalten, dadurch gekennzeichnet, daß zur Vermeidung von Anreicherungen der Schwermetallverbindungen durch Kreisläufe ein Teil der Abgase über einen Bypass aus dem System abgezogen wird.

13. Verfahren nach den Ansprüchen 1 und 12 zur Reinigung von Abgasen, die auch leicht verdampfbare Schwermetallverbindungen, insbesondere von Quecksilber, Thallium und/oder Cadmium enthalten, dadurch gekennzeichnet, daß zur Vermeidung von Anreicherungen der Schwermetallverbindungen durch Kreisläufe ein Teil des in der ersten Filterstufe abgeschiedenen Staubes aus dem System abgezogen und entweder verworfen oder durch Zumischung zum Zement in den Beton eingebunden wird.

14. Anlage zur Herstellung von Zementklinker, enthaltend
a) einen zur Vorwärmung und wenigstens teilweisen Entsäuerung von Zementrohmaterial dienenden Vorwärmer (1),
b) einen Brennofen (2), insbesondere Drehrohrofen, zum Fertigbrennen des vorgewärmten und entsäuerten Materiales,
c) einen zur Entstaubung der Abgase des Vorwärmers dienenden ersten Filter (9),
d) einen diesem ersten Filter in Abgasströmungsrichtung nachgeschalteten zweiten Filter (10), der ein zur Einbindung von NHₓ-Verbindungen, Schwermetallen, Spurenschadstoffen und/oder SO₂ geeignetes Adsorbens enthält,
e) Einrichtungen, durch die zu bestimmten Zeiten wenigstens ein Teil des mit NHₓ-Verbindungen, Schwermetallen, Spurenschadstoffen und/oder SO₂ beladenen Adsorbenss aus dem zweiten Filter (10) abgezogen und zumindest teilweise in den Brennofen (2) und/oder Vorwärmer (1) einführbar ist,
gekennzeichnet durch
f) eine Überwachungs- und Steuereinrichtung (28, 28') zum Einstellen der Vorwärmerabgase vor dem ersten Filter (9) auf eine Eingangstemperatur zwischen etwa 70 bis 150 °C, vorzugsweise zwischen etwa 80 bis 130 °C, sowie
g) wenigstens eine vor dem ersten Filter angeordnete Kühlgaszuführeinrichtung (21), die steuerungsmäßig mit der Überwachungs- und Steuereinrichtung verbunden ist.

15. Anlage nach Anspruch 14, dadurch gekennzeichnet, daß zwischen dem ersten und dem zweiten Filter (9, 10) eine von der dem ersten Filter (9) vorgeschalteten Kühlgas-Zuführeinrichtung (21) unabhängige Frischluftzuführung (29) vorgesehen ist, durch die die dem zweiten Filter (10) zuzuführenden entstaubten Abgase in Anpassung an den Wärmebehandlungsbetrieb im Vorwärmer (1) und/oder Brennofen (2) insbesondere hinsichtlich Temperatur und Volumen in gesteuerter Weise konditionierbar sind.

16. Anlage nach Anspruch 14, dadurch gekennzeichnet, daß in dem Abgasleitungsabschnitt (23a) hinter dem ersten Filter (9) eine die Abgasqualität ermittelnde Meßeinrichtung (35) angeordnet ist, die steuerungsmäßig mit der Überwachungs- und Steuereinrichtung (28') für die Einstellung der Eingangstemperatur des ersten Filters in Verbindung steht.

## Claims

1. Method of purifying the exhaust gases from plants for the production of cement clinker, in which the raw material is preheated in a preheating zone with the hot exhaust gases from a final burning zone and at least partially deacidified before the material which has been preheated in this way is finally burnt in the final burning zone to produce cement clinker, and in which the exhaust gases from the preheating zone are purified in a multi-stage filter zone, in which dust is first of all precipitated out of the exhaust gases in a first filter stage and these exhaust gases then flow through at least one further filter stage which is constructed as an adsorption stage and contains an adsorbent by means of which NHₓ compounds, heavy metals, trace pollutants and/or SO₂ contained in the exhaust gases are fixed and NOₓ is at least partially reduced, characterised in that the exhaust gases from the preheating zone are set to such a filter zone inlet temperature before the first filter stage that in this first filter stage easily volatile pollutant elements and pollutant compounds are precipitated out of the exhaust gases together with the dust, whilst in the further filter stage the fixing of the residual pollutants and the NOₓ reduction are carried out.

2. Method as claimed in claim 1, characterised in that the solids containing dust and precipitated pollutant elements and pollutant compounds accumulating in the first filter stage are at least partially removed from the clinker production plant.

3. Method as claimed in claim 2, in which the cement clinker is finally ground in a cement grinding zone belonging to the clinker production plant, characterised in that a proportion of the solids precipitated in the first filter stage are added to the cement clinker to be ground in the cement grinding zone.

4. Method as claimed in claim 1, in which the exhaust gases from the preheating zone are introduced into the filter zone as required via a cooling tower in direct operation or via a raw grinding mill in combined operation, characterised in that before being introduced into the first filter stage the exhaust gases are cooled to a filter zone inlet temperature of approximately 70 to 150°C, preferably approximately 80 to 130°C.

5. Method as claimed in claim 4, characterised in that the at least in direct operation the exhaust gases from the preheating zone are cooled by the additional supply of cooling gas, particularly fresh air, the cooling gas being supplied before or after passing through the cooling tower.

6. Method as claimed in claim 5, characterised in that the quantity of cooling gas to be supplied to the exhaust gases before the first filter stage is regulated - preferably automatically - depending upon a measurement value determined before this first filter stage.

7. Method as claimed in claim 7, characterised in that for regulation of the quantity of cooling gas to be supplied before the first filter stage to the exhaust gases from the preheating zone the gas quality in the region between the first and second filter stage is also determined and processed.

8. Method as claimed in claim 4, characterised in that independently of the supply of cooling gas before the first filter stage, between the first and second filter stages fresh air is added to the exhaust gases supplied to the second filter stage to adapt to operational fluctuations in the cement clinker production plant.

9. Method as claimed in claim 1, characterised in that at least a proportion of the adsorbent charged with NHₓ compounds, heavy metals, trace pollutants and/or SO₂ is removed from the further filter stage at specific intervals of time or at a specific pollutant charge and introduced into the final burning zone and/or preheating zone.

10. Method as claimed in claim 1, characterised in that at least a proportion of the fuel used is formed by secondary fuel, such as old tyres, acid sludge, fuller's earth, fuel from refuse, gas from refuse tips, pyrolysis gas, solvent residues, PCB-contaminated used oil, sludge, wood chippings, fruit peelings.

11. Method as claimed in claim 10, characterised in that at lest a proportion of the secondary fuel used is introduced into the part of the preheating zone (precalcination zone) which serves for deacidification of the raw material and/or into the region of the final burning zone on the material inlet side.

12. Method as claimed in claim 10 for purifying exhaust gases which also contain easily vaporisable heavy metal compounds, particularly mercury, thallium and/or cadmium, characterised in that a proportion of the exhaust gases is withdrawn from the system via a bypass in order to avoid accumulations of the heavy metal compounds through circulation systems.

13. Method as claimed in claims 1 and 12 for purifying exhaust gases which also contain easily vaporisable heavy metal compounds, particularly mercury, thallium and/or cadmium, characterised in that a proportion of the dust precipitated in the first filter stage is withdrawn from the system and either rejected or fixed in the concrete by admixture with the cement in order to avoid accumulations of the heavy metal compounds through circulation systems.

14. Plant for producing cement clinker, containing
a) a preheater (1) which serves for preheating and at least partial deacidification of the cement raw material,
b) a furnace (2), particularly a rotary kiln, for final burning of the preheated and deacidified material,
c) a first filter (9) which serves for cleaning dust from the exhaust gases from the preheater,
d) a second filter (10) which is arranged after this first filter in the direction in which the exhaust gases flow and which contains an adsorbent suitable for fixing NHₓ compounds, heavy metals, trace pollutants and/or SO₂,
e) arrangements by means of which a proportion of the adsorbent charged with NHₓ compounds, heavy metals, trace pollutants and/or SO₂ is withdrawn from the second filter (10) at specific times and can be introduced at least in part into the furnace (2) and/or preheater (1),
characterised by
f) a monitoring and control arrangement (28, 28') for setting the exhaust gases from the preheater before the first filter (9) to an inlet temperature between approximately 70 and 150°C, preferably between approximately 80 and 130°C, and
g) at least one cooling gas supply arrangement (21) which is arranged before the first filter and is connected for control purposes to the monitoring and control arrangement.

15. Plant as claimed in claim 14, characterised in that between the first and second filters (9, 10) there is provided a fresh air supply duct (29) which is independent of the cooling gas supply arrangement 21 arranged before the first filter (9) and by means of which the dust-free exhaust gases to be supplied to the second filter (10) can be conditioned in a controlled manner in adaptation to the heat treatment operation in the preheater (1) and/or furnace (2), particularly as regards temperature and volume.

16. Plant as claimed in claim 14, characterised in that a measuring arrangement (35) which determines the exhaust gas quality is arranged in the exhaust gas duct section (23a) and is connected for control purposes to the monitoring and control arrangement (28') in order to set the inlet temperature of the first filter.

## Revendications

1. Procédé d'épuration des gaz évacués d'installation de production de clinker de ciment, la matière première du ciment étant réchauffée dans une zone correspondante par les gaz chauds évacués d'une zone d'achèvement de la combustion et étant au moins partiellement désacidifiée avant que la matière ainsi réchauffée soit soumise à l'achèvement de la cuisson dans une zone correspondante pour être transformée en clinker, les gaz évacués de la zone de réchauffage étant épurés dans une zone de filtrage à plusieurs étages, la poussière étant ainsi tout d'abord séparée des gaz évacués dans une première zone de filtrage et ces gaz évacués passant ensuite dans au moins un autre étage de filtrage qui est conformé en étage d'adsorption et contient un adsorbant qui fixe les composés de NHₓ, les métaux lourds, les traces de substances nocives et/ou le SO₂ que contiennent les gaz évacués et qui réduit au moins partiellement les NOₓ, caractérisé en ce que les gaz évacués de la zone de réchauffage sont portés en amont du premier étage de filtrage à une température d'entrée dans la zone de filtrage qui est telle que les éléments de substances nocives et les composés de substances nocives très volatiles sont séparés des gaz évacués conjointement avec la poussière dans ce premier étage de filtrage, tandis que la fixation du reste des substances nocives et la réduction des NOₓ sont effectuées dans l'autre étage de filtrage.

2. Procédé selon la revendication 1, caractérisé en ce que les matière solides provenant du premier étage de filtrage et contenant de la poussière ainsi que les éléments de substances nocives et les composés de substances nocives séparés sont évacuées au moins partiellement de l'installation de production de clinker.

3. Procédé selon la revendication 2, suivant lequel l'achèvement du broyage du clinker est effectué dans une zone de broyage de ciment faisant partie de l'installation de production de clinker, caractérisé en ce qu'une partie des matières solides séparées dans le premier étage de filtrage est additionnée dans la zone de broyage du ciment au clinker devant être broyé.

4. Procédé selon la revendication 1, suivant lequel les gaz évacués de la zone de réchauffage sont dirigés sélectivement en mode d'exploitation directe, par l'intermédiaire d'une tour de refroidissement ou en mode d'exploitation mixte, par l'intermédiaire d'un broyeur de matière première dans la zone de filtrage, caractérisé en ce que les gaz évacués sont refroidis, avant d'être dirigés dans le premier étage de filtrage, à une température d'entrée dans la zone de filtrage d'environ 70 à 150°C, de préférence d'environ 80 à 130°C.

5. Procédé selon la revendication 4, caractérisé en ce que les gaz évacués de la zone de réchauffage sont refroidis au moins en mode d'exploitation directe par apport auxiliaire de gaz réfrigérant, en particulier d'air frais, l'apport de gaz réfrigérant s'effectuant avant ou après passage par la tour de refroidissement.

6. Procédé selon la revendication 5, caractérisé en ce que la quantité du gaz réfrigérant devant être envoyée dans les gaz évacués en amont du premier étage de filtrage est réglée - de préférence automatiquement - en fonction d'une mesure effectuée en amont de ce premier étage de filtrage.

7. Procédé selon la revendication 6, caractérisé en ce que la qualité des gaz est accessoirement déterminée et traitée dans la zone comprise entre les premier et second étages de filtrage pour le réglage de la quantité de gaz réfrigérant devant être additionnée devant le premier étage de filtrage aux gaz évacués de la zone de réchauffage.

8. Procédé selon la revendication 4, caractérisé en ce que de l'air frais destiné à une adaptation aux fluctuations de l'exploitation de l'installation de production de clinker est additionné entre les premier et second étages de filtrages aux gaz évacués qui sont envoyés dans le second étage de filtrage, indépendamment de l'apport de gaz réfrigérant qui est effectué en amont du premier étage de filtrage.

9. Procédé selon la revendication 1, caractérisé en ce qu'au moins une partie de l'adsorbant chargé de composés de NHₓ, de métaux lourds, de traces de substances nocives et/ou de SO₂ est soutirée de l'autre étage de filtrage à intervalles déterminés de temps ou lorsque cet adsorbant contient une charge déterminée de substances nocives et est introduite dans la zone d'achèvement de la cuisson et/ou dans la zone de réchauffage.

10. Procédé selon la revendication 1, caractérisé en ce qu'au moins une partie du combustible utilisé est formée de combustible secondaire tel que des pneumatiques usés, des goudrons de dépôt de fond, des argiles absorbantes, du combustible provenant d'ordures, du gaz provenant de décharges, du gaz de pyrolyse, des résidus de solvants, de l'huile usée contaminée par du biphénylène surchloré, de la boue de curage, des copeaux de bois, des écales.

11. Procédé selon la revendication 10, caractérisé en ce qu'au moins une partie du combustible secondaire utilisé est introduite dans la partie de la zone de réchauffage destinée à la désacidification de la matière première (zone de précalcination) et/ou dans la région d'entrée de la matière de la zone d'achèvement de la cuisson.

12. Procédé selon la revendication 10 d'épuration de gaz évacués qui contiennent aussi des composés de métaux lourds, en particulier de mercure, de thallium et/ou de cadmium, qui s'évaporent facilement, caractérisé en ce que, pour éviter des accumulations de composés de métaux lourds dans les circuits, une partie des gaz évacués est soutirée du système au moyen d'une dérivation.

13. Procédé selon les revendications 1 et 12 d'épuration de gaz évacués qui contiennent aussi des composés de métaux lourds, en particulier de mercure, de thallium et/ou de cadmium, qui s'évaporent facilement, caractérisé en ce que, pour éviter les accumulations des composés de métaux lourds dans les circuits, une partie de la poussière séparée dans le premier étage de filtrage est soutirée du système et soit jetée, soit liée dans le béton par addition au ciment.

14. Installation de production de clinker comprenant :
a) un réchauffeur (1) de réchauffage et de désacidification au moins partielle de la matière première du ciment,
b) un four de cuisson (2), en particulier un four tubulaire rotatif d'achèvement de la cuisson de la matière réchauffée et désacidifiée,
c) un premier filtre (9) de dépoussiérage des gaz évacués du réchauffeur,
d) un second filtre (10) monté en aval de ce premier filtre dans le sens de la circulation des gaz évacués et contenant un adsorbant qui convient à fixer les composés de NHₓ, les métaux lourds, les traces de substances nocives et/ou le SO₂,
e) des dispositifs permettant d'évacuer du second filtre (10) au moins une partie de l'adsorbant chargé de composés de NHₓ, de métaux lourds, de traces de substances nocives et/ou de SO₂, et de l'introduire au moins partiellement dans le four de cuisson (2) et/ou le réchauffeur (1),
caractérisé par :
f) un dispositif de contrôle et de commande (28, 28') destiné à porter les gaz évacués du réchauffeur, en amont du premier filtre (9), à une température d'entrée comprise entre environ 70 et 150°C, de préférence entre environ 80 et 130°C, ainsi que
g) au moins un dispositif d'apport de gaz réfrigérant qui est disposé en amont du premier filtre et dont la commande est reliée au dispositif de contrôle et de commande.

15. Installation selon la revendication 14, caractérisée en ce qu'une arrivée d'air frais (29) indépendante du dispositif (21) d'apport de gaz réfrigérant qui est monté en amont du premier filtre (9) est prévue entre les premier et second filtres (9, 10) et permet de conditionner de manière commandée en particulier la température et le volume des gaz évacués, dépoussiérés et devant être dirigés dans le second filtre (10) en fonction du régime de traitement thermique effectué dans le réchauffeur (1) et/ou dans le four de cuisson (2).

16. Installation selon la revendication 14, caractérisée en ce qu'un dispositif de mesure (35) déterminant la qualité du gaz dans la partie (23a) du conduit des gaz évacués qui est située derrière le premier filtre (9) comprend une commande qui est reliée au dispositif de contrôle et de commande (28') destiné au réglage de la température d'entrée dans le premier filtre.
